(19) Europäisches Patentamt
European Patent Office
Office européen des brevets

(11) EP 0 505 785 B1

(12) **EUROPÄISCHE PATENTSCHRIFT**

(45) Veröffentlichungstag und Bekanntmachung des Hinweises auf die Patenterteilung:
**10.12.1997 Patentblatt 1997/50**

(51) Int. Cl.$^6$: **C08F 8/00**, C08C 19/00, C10M 143/12

(21) Anmeldenummer: **92103805.5**

(22) Anmeldetag: **06.03.1992**

(54) **Seitengruppen enthaltende Alkadien-Vinylaromat-Copolymerisate und ihre Verwendung**
Side groups containing diene/vinyl aromatic copolymers and use thereof
Copolymères diène/vinylaromatiques contenant des groupes pendants et leur utilisation

(84) Benannte Vertragsstaaten:
**BE CH DE FR GB IT LI NL**

(30) Priorität: **23.03.1991 DE 4109635**

(43) Veröffentlichungstag der Anmeldung:
**30.09.1992 Patentblatt 1992/40**

(73) Patentinhaber:
**BASF Aktiengesellschaft**
**67063 Ludwigshafen (DE)**

(72) Erfinder:
- **Bender, Dietmar, Dr.**
**W-6707 Schifferstadt (DE)**
- **Bronstert, Klaus, Dr.**
**W-6719 Carlsberg (DE)**
- **Mach, Helmut, Dr.**
**W-6900 Heidelberg (DE)**

(56) Entgegenhaltungen:
**EP-A- 0 329 254** **US-A- 4 402 843**
- **JOURNAL OF POLYMER SCIENCE, POLYMER CHEMISTRY EDITION. Bd. 15, 1977, NEW YORK US Seite 1527; G.JALICS: 'POLYMERS WITH REACTIVE END GROUPS'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 505 785 B1

## Beschreibung

Die vorliegende Erfindung betrifft neue Seitengruppen enthaltende Alkadien-Vinylaromat-Copolymerisate mit statistischem, blockartigem oder sternförmigem Aufbau, deren einpolymerisierte Alkadiencomonomereinheiten selektiv partiell oder vollständig hydriert sind, sowie ihre Verwendung in der Motortechnik und als Viskositäts-Index(VI)-Verbesserer von Mineral- und Schmierölen, insbesondere von Motor- und Getriebeölen.

Im folgenden werden die Viskositäts-Index(VI)-Verbesserer der Kürze halber als "VI-Verbesserer" bezeichnet.

Als VI-Verbesserer in Mineral- und Schmierölen werden bestimmte Polymerisate und Copolymerisate mit mittleren Molmassen zwischen 10.000 und 500.000 g/mol verwendet. Hierzu sei auf Ullmanns Encyklopädie der technischen Chemie, 4. Auflage, Band 20, Schmierstoffe, Seiten 543 bis 548, Weinheim, 1981, oder auf Encyclopedia of Polymer Science and Engineering, Second Edition, Volume 11, Petroleum Additives, Seiten 21 bis 30, John Wiley and Sons, New York, 1988, verwiesen, worin ein Überblick über das hier in Rede stehende technische Gebiet gegeben wird.

Außer diesen VI-Verbesserern enthalten heute gebräuchliche Schmierstoff-Formulierungen neben einer ganzen Reihe von Additiven auch Dispergatoren, denen die Aufgabe zukommt, unlösliche Verbrennungsrückstände wie Ruß, Koks oder harz- und asphaltartige Oxidationsprodukte, deren Anteil in Dieselmotoröl bis zu 10 Gew.% betragen kann, in Suspension zu halten und dadurch Ablagerungen an Metalloberflächen, ölverdickung und Schlammausscheidungen im Motor zu verhindern. Außerdem sollen sie saure Verbrennungsprodukte neutralisieren, um so dem korrosiven Verschleiß der Motorteile vorzubeugen. Hierzu sei auf den Artikel von N. J. H. Small in "Katalysatoren, Tenside und Mineralöladditive", Herausgeber J. Falbe und U. Hasserodt, G. Thieme Verlag Stuttgart, 1978, Seiten 235 bis 239, verwiesen, worin die Wirkungsweise von Dispergatoren, welche von der Fachwelt auch als "Dispersants" oder "dispergierende Mittel" bezeichnet werden, beschrieben ist.

Beispiele solcher Dispergatoren sind Umsetzungsprodukte von Alkenylbernsteinsäureanhydriden, insbesondere Polyisobutenylbernsteinsäureanhydriden, mit Aminen oder Polyaminen und anderen nucleophilen Reagentien, wie sie beispielsweise in Chemical Technology Review No. 207, Seiten 3ff, NDC, New Jersey, 1982, beschrieben sind.

Da diese Dispergatoren notwendigerweise polare Verbindungen sind oder zumindest eine ausreichende Zahl polarer Gruppen im Molekül enthalten, können sie die anwendungstechnischen Eigenschaften der in der Regel unpolaren VI-Verbesserer nachteilig beeinflussen, indem sie z.B. die Löslichkeit oder Quellbarkeit der VI-Verbesserer im Mineral- oder Schmieröl herabsetzen. Indes müssen die für eine bestimmte Schmierstofformulierung vorgesehenen Additive unbedingt miteinander verträglich sein, was jedoch nicht in jedem Fall voraussagbar ist.

Man ist deshalb bestrebt, die Eigenschaften von Dispergatoren und VI-Verbesserern in einem Polymerisat oder Copolymerisat zu vereinigen, um einerseits Probleme der Additivverträglichkeit zu umgehen und andererseits den Anteil an Additiven an einer Schmierstofformulierung zu verringern.

Zu diesem Zweck wurden bereits VI-Verbesserer mit Dispergierwirkung vorgeschlagen (vgl. z.B. Chemical Technology Review No. 207, Seiten 225ff, NDC, New Jersey, 1982). Beispiele für solche dispergierend wirkende VI-Verbesserer sind Acylgruppen tragende Polymerisate und Copolymerisate unterschiedlicher Zusammensetzungen, welche mit Aminogruppen enthaltenden Reagentien umgesetzt worden sind (vgl. die US-A-4 735 735 oder die US-A-4 670 173), oder mit Aminen modifizierte Homo- und Copolymerisate (vgl. die US-A-4 715 975 oder die EP-A-0 171 167).

Diesen bekannten dispergierend wirkenden VI-Verbesserern ist gemeinsam, daß die nachträgliche Einführung polarer Gruppen oftmals zu einer Verringerung der Löslichkeit in dem unpolaren Mineral- oder Schmieröl (Basisöl) führt. Es muß deshalb stets eine Balance zwischen der dispergierenden Wirkung, welche ja auf dem Vorhandensein der polaren Gruppen beruht, und der öllöslichkeit angestrebt werden, was indes nur mit Verfahren bewerkstelligt werden kann, die es gestatten, polare funktionelle Gruppen in kontrollierter Weise in VI-Verbesserer einzuführen.

Solche Verfahren sind beispielsweise aus der US-A-4 145 298 bekannt. Hierbei werden mit Hilfe starker Metallbasen, wie sie beispielsweise im Journal of the American Chemical Society, Band 95, Seiten 2376ff, 1973, oder in Tetrahedron Letters, Seiten 1083ff, 1963, beschrieben sind, statistisch verteilte carbanionische Zentren entlang der Polymerhauptkette erzeugt, welche in einem zweiten Reaktionsschritt mit geeigneten Elektrophilen wie Ketone, Aldehyde, Nitrile oder Epoxide umgesetzt werden. Ein Nachteil dieser Methode besteht darin, daß nur Elektrophile mit tertiären Aminogruppen verwendet werden können, weil sekundäre oder primäre Aminogruppen die carbanionischen Zentren protonieren. Indes haben gerade die sekundären und primären Aminogruppen eine im Vergleich zu den tertiären deutlich bessere dispergierende Wirkung.

Um das Problem der Protonierung zu beheben, sind alternative elektrophile Reagentien vorgeschlagen worden, welche nach ihrer Reaktion mit den Homo- und Copolymerisaten durch Hydrolyse sekundäre Aminogruppen bilden (vgl. die EP-A-0 329 254). Desweiteren kann man zu diesem Zweck lebende, anionisch polymerisierte Homo- und Copolymerisate mit Aminen terminieren (vgl. die US-A-4 051 050). Indes sind alle diese Verfahren bezüglich der Wahl der Reaktionspartner und bezüglich der Natur der geeigneten Elektrophile und polaren funktionellen Gruppen begrenzt.

Es bestand daher die Aufgabe, neue, in ihren anwendungstechnischen Eigenschaften über das bislang bekannte Maß hinaus verbesserte, Seitengruppenenthaltende Alkadien-Vinylaromat-Copolymerisate zu finden, welche einen statistischen, blockartigen oder sternförmigen Aufbau haben und deren ein-polymerisierte Alkadiencomonomereinheiten selektiv partiell oder vollständig hydriert sind und welche entweder bereits als solche als VI-Verbesserer geeignet

sind oder welche der Herstellung neuartiger, in ihren anwendungstechnischen Eigenschaften deutlich verbesserter, dispergierend wirkender VI-Verbesserer dienen können.

Außerdem war es die Aufgabe der vorliegenden Erfindung, neue Verfahren zu finden, mit deren Hilfe sich diese neuen Seitengruppen enthaltenden Alkadien-Vinylaromat-Copolymerisate bzw. die neuen VI-Verbesserer in einfacher und zuverlässiger Weise herstellen lassen.

Diese Aufgaben, welche der vorliegenden Erfindung zugrundeliegen, konnten in überraschender Weise durch die Einführung von Seitengruppen, welche zur (4+2)-Cycloaddition (Diels-Alder-Reaktion) mit Dienophilen befähigt sind, in Alkadien-Vinylaromat-Copolymerisate, welche statistisch, blockartig oder sternförmig aufgebaut und deren einpolymerisierte Alkadiencomonomereinheiten selektiv partiell oder vollständig hydriert sind, gelöst werden. Im Hinblick auf den Stand der Technik war es nicht zu erwarten, daß die unserer Erfindung zugrundeliegenden Aufgaben gerade in dieser Weise elegant und zuverlässig gelöst werden konnten, wobei die Anzahl gut geeigneter Reaktionspartner, welche sich unter milden Reaktionsbedingungen miteinander umsetzen ließen, noch mehr überraschte.

Demgemäß handelt es sich bei dem Gegenstand der vorliegenden Erfindung um Alkadien-Vinylaromat-Copoljmerisate mit statistischem, blockartigem oder sternförmigem Aufbau, deren einpolymerisierte Alkadiencomonomereinheiten selektiv partiell oder vollständig hydriert sind und welche dadurch gekennzeichnet sind, daß sie mindestens eine Seitengruppe mit mindestens einem Rest enthalten, welcher zur (4+2)-Cycloaddition (Diels-Alder-Reaktion) mit Dienophilen befähigt oder welcher durch (4+2)-Cycloaddition nach Diels-Alder eines Dienrestes mit einem Dienophil hergestellt worden ist.

Noch ein weiterer Gegenstand der vorliegenden Erfindung sind Alkadien-Vinylaromat-Copolymerisate der vorstehend genannten Art, welche dadurch gekennzeichnet sind, daß sie mindestens eine Seitengruppe mit mindestens einem Rest enthalten, welcher durch (a) (4+2)-Cycloaddition nach Diels-Alder eines Dienrests mit mindestens einem Dienophil, welches polare funktionelle Gruppen enthält, und (b) Umsetzen des resultierenden Diels-Alder-Addukts mit Ammoniak, organischen Aminen, Alkylenoxiden, Polyalkylenoxiden und/oder Kondensationsprodukten von Ammoniak und/oder organischen Aminen mit Alkylenoxiden hergestellt worden ist.

Ferner sind neue Verfahren zur Herstellung dieser vorstehend genannten neuen Alkadien-Vinylaromat-Copolymerisate weitere Gegenstände der vorliegenden Erfindung.

Durch den Einbau mindestens einer Seitengruppe mit mindestens einem Rest, welcher zur (4+2)-Cycloaddition oder Diels-Alder-Reaktion mit Dienophilen befähigt ist, in Alkadien-Vinylaromat-Copolymerisate mit statistischem, blockartigem oder sternförmigem Aufbau, deren einpolymerisierte Alkadiencomonomereinheiten selektiv partiell oder vollständig hydriert sind, haben sich in überraschender Weise völlig neue Wege zur eleganten und zuverlässigen Herstellung von dispergierend wirkenden VI-Verbesserern für Mineral- oder Schmieröle, insbesondere Motor- und Getriebeöle, eröffnet: im Gegensatz zu den bekannten, sogenannten "En"-Reaktionen, mit deren Hilfe beispielsweise Maleinsäureanhydrid bei 150 bis 200°C auf z.B. Polybutadiene aufgepfropft wird, laufen die Cycloadditionsreaktionen, insbesondere die sogenannte Diels-Alder-Reaktion [(4+2)-Cycloaddition], bereits bei Raumtemperatur mit hoher Geschwindigkeit ab. Hierdurch wird eine thermische Belastung der Reaktionspartner und der Endprodukte vermieden. Außerdem können weniger reaktive Dienophile durch den Zusatz von Lewis-Säuren in ihrer Reaktivität stark angehoben werden, so daß auch in diesen Fällen eine thermische Belastung vermieden werden kann. Nach der Diels-Alder-Reaktion können gegebenenfalls vorhandene polare funktionelle Gruppen der gebildeten Seitengruppen in stark dispergierend wirkende funktionelle Gruppen umgewandelt werden.

Im folgenden werden der Kürze halber

- diejenigen neuartigen Alkadien-Vinylaromat-Copolymerisate, welche durch ihren Gehalt an Seitengruppen mit mindestens einem zur (4+2)-Cycloaddition (Diels-Alder-Reaktion) mit Dienophilen befähigten Rest gekennzeichnet sind, als "erfindungsgemäße Copolymerisate I",

- diejenigen Alkadien-Vinylaromat-Copolymerisate, welche durch ihren Gehalt an Seitengruppen mit mindestens einem durch (4+2)-Cycloaddition nach Diels-Alder eines Dienrests mit einem Dienophil hergestellten Rest gekennzeichnet sind, als "erfindungsgemäße Copolymerisate II" und

- diejenigen neuen Alkadien-Vinylaromat-Copolymerisate, welche durch ihren Gehalt an Seitengruppen mit mindestens einem Rest, welcher durch (a) (4+2)-Cycloaddition nach Diels-Alder eines Dienrests mit mindestens einem polare funktionelle Gruppen enthaltenden Dienophil und (b) Umsetzen des resultierenden Diels-Alder-Addukts mit Ammoniak, organischen Aminen, Alkylenoxiden, Polyalkylenoxiden und/oder Kondensationsprodukten von Ammoniak und/oder organischen Aminen mit Alkylenoxiden hergestellt worden ist, gekennzeichnet sind, als "erfindungsgemäße Copolymerisate III"

bezeichnet.

Der eine wesentliche Bestandteil der erfindungsgemäßen Copolymerisate I, II und III sind an sich bekannte Alkadien-Vinylaromat-Copolymerisate mit statistischem, blockartigem oder sternförmigem Aufbau, deren einpolymerisierte

Alkadiencomonomereinheiten selektiv partiell oder vollständig hydriert sind. Copolymerisate dieser Art und ihre Verwendung als VI-Verbesserer sind aus dem eingangs genannten Stand der Technik bekannt. Hierbei können die Copolymerisate bekanntermaßen in ihren Polymerhauptketten eine statistische Verteilung der einpolymerisierten Comonomereinheiten aufweisen oder sie können blockartig aufgebaut sein, wobei neben den üblichen A-B- und A-B-A-Zwei- und Dreiblockmischpolymerisaten aus einem Vinylaromatenblock B und mindestens einem Alkadienblock A auch kompliziertere Primärstrukturen mit Blöcken aus weiteren einpolymerisierten Comonomeren C und/oder D wie etwa A-B-C-B-A- oder A-B-C-D-Blockmischpolymerisate verwendbar sind. Desweiteren kommen Alkadien-Vinylaromat-Copolymerisate mit sternförmigem Aufbau in Betracht. Diese werden bekanntermaßen durch die Kupplung lebender Homo- oder Copolymerisate mit geeigneten multifunktionellen Verbindungen hergestellt. Ihrer strukturellen Vielfalt sind kaum Grenzen gesetzt; die bekanntesten Vertreter sternförmiger Alkadien-Vinylaromat-Copolymerisate weisen indes im allgemeinen Strukturen wie $A_x$-Z, $(A-B)_x$-Z, $(A-B)_w$-Z-(B)v und $(A-B)_w$-Z-$(A)_v$ auf, worin Z den Rest eines zwei- oder mehrfach funktionellen Kupplungsreagens, B einen Vinylaromatblock, A einen Alkadienblock, x eine ganze Zahl $\geq$ 2 und v und w unabhängig voneinander eine ganze Zahl $\geq$ 1 bezeichnen. Bei allen Blockmischpolymerisaten der vorstehend genannten Art kann der Übergang zwischen den Vinylaromatblöcken B und den Alkadienblöcken A scharf sein, oder aber der Block B geht allmählich in den Block A über, was auch als "verschmierter Übergang" bezeichnet wird.

Beispiele geeigneter Alkadiene sind konjugierte Alkadiene wie 1,3-Butadien, Isopren und 2,3-Dimethylbutadien.

Beispiele geeigneter Vinylaromaten sind Styrol, $\alpha$-Methylstyrol und kernalkylierte Styrole wie o-, p- und m-Methylstyrol.

Beispiele besonders gut geeigneter Comonomere sind Butadien und Isopren einerseits und Styrol andererseits, wobei der Anteil des Styrols im Alkadien-Vinylaromat-Copolymerisat bei 20 bis 80 Gew.%, vorzugsweise bei 25 bis 60 Gew.% liegt.

Das zahlenmittlere Molekulargewicht $\overline{M}_n$ dieser an sich bekannten Alkadien-Vinylaromat-Copolymerisate liegt im allgemeinen zwischen 10.000 und 700.000, vorzugsweise zwischen 50.000 und 350.000.

Die an sich bekannten Alkadien-Vinylaromat-Copolymerisate können nach den an sich bekannten Verfahren der Polymerchemie, wie sie beispielsweise in dem Lehrbuch von W. R. Sorenson und T.W. Campbell, Preparative Methods in Polymer Chemistry, 2nd Edition, Wiley New York, 1968, beschrieben sind, hergestellt werden. Vorzugsweise werden sie indes durch die anionische Polymerisation oder Blockmischpolymerisation hergestellt, weil hierdurch Alkadien-Vinylaromat-Copolymerisate mit blockartigem oder sternförmigem Aufbau und sehr engen Molmassenverteilungen resultieren.

Für die Herstellung der erfindungsgemäßen Copolymerisate I, II und III werden die in den Alkadien-Vinylaromat-Copolymerisaten verbliebenen olefinisch ungesättigten Doppelbindungen der einpolymerisierten Alkadiencomonomereinheiten selektiv partiell oder vollständig hydriert. Beispiele geeigneter Katalysatoren für die Hydrierung sind die Reaktionsprodukte von Aluminiumalkylen und Nickel sowie Kobaltcarboxylate und -alkoholate. Ein Beispiel eines besonders gut geeigneten Katalysators ist die Mischung aus Nickel(II)-acetylacetonat und Aluminiumtriisobutyl. Im allgemeinen wird die Hydrierung bei Temperaturen zwischen 25 und 200°C unter einem Wasserstoffdruck von 5 bis 100 bar durchgeführt. Vorteilhafterweise wird solange hydriert, bis mehr als 95 % der in den Alkadien-Vinylaromat-Copolymerisaten noch vorhandenen olefinisch ungesättigten Doppelbindungen hydriert sind.

Der erfindungsgemäß wesentliche Bestandteil der erfindungsgemäßen Copolymerisate I sind die Seitengruppen mit mindestens einem Rest, welcher zur (4+2)-Cycloaddition (Diels-Alder-Reaktion) mit Dienophilen befähigt ist. Reste dieser Art enthalten im allgemeinen zwei konjugierte olefinisch ungesättigte Doppelbindungen in cis-Konfiguration. Beispiele gut geeigneter erfindungsgemäß zu verwendender Reste dieser Art sind Cyclopentadienylreste.

Beispiele ganz besonders gut geeigneter erfindungsgemäß zu verwendender Cyclopentadienylreste sind diejenigen der allgemeinen Formel Ia, Ib oder Ic,

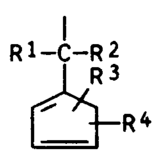
(Ia)

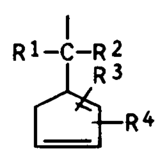
(Ib)

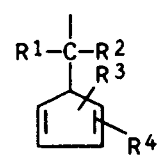
(Ic)

welche entweder direkt oder über einen aromatischen Rest der Seitengruppe an die Polymerhauptkette(n) der vorstehend genannten selektiv hydrierten Alkadien-Vinylaromat-Copolymerisate gebunden sind.

In den allgemeinen Formeln Ia, Ib und Ic können die Reste $R^1$ bis $R^4$ gleich oder verschieden voneinander sein. Hierbei können sie Wasserstoffatome, lineare oder verzweigte, substituierte oder unsubstituierte $C_1$- bis $C_{22}$-Alkyl- oder -Alkenylreste, lineare oder verzweigte, substituierte oder unsubstituierte $C_1$- bis $C_{22}$-Alkyl- oder -Alkenylreste,

deren Kohlenstoffkette(n) mit Sauerstoff, N-($C_1$- bis $C_4$-Alkyl) und/oder Schwefel unterbrochen ist oder sind, substituierte oder unsubstituierte $C_3$- bis $C_{20}$-Cycloalkylreste, substituierte oder unsubstituierte $C_6$- bis $C_{20}$-Arylreste, substituierte oder unsubstituierte $c_6$- bis $C_{20}$-Aryl- oder $C_3$- bis $C_{20}$-Cycloalkylreste, welche noch mindestens einen der vorstehend genannten $C_1$- bis $C_{22}$-Alkyl- und/oder -Alkenylreste, $C_3$- bis $C_{20}$-Cycloalkylreste und/oder $C_6$- bis $C_{20}$-Arylreste enthalten, oder die vorstehend genannten $C_1$- bis $C_{22}$-Alkyl- oder -Alkenylreste, welche noch mindestens einen der vorstehend genannten $C_6$- bis $C_{20}$-Aryl- und/oder $C_3$- bis $C_{20}$-Cycloalkylreste enthalten, bezeichnen. Hierbei können die Reste $R^1$ und $R^2$ auch als Bestandteile eines gemeinsamen Rings cyclisch miteinander verknüpft sein.

Für den Fall, daß die vorstehend genannten Alkyl-, Alkenyl-, Cycloalkyl- und Arylreste substituiert sind, dürfen die betreffenden Substituenten keine CH-aciden funktionellen Gruppen enthalten.

Beispiele besonders gut geeigneter Reste $R^1$ bis $R^4$ sind Wasserstoff, Methyl, Ethyl, n-Propyl, i-Propyl, n-Butyl, But-2-yl, n-Pentyl, 3-Oxa-pent-1-yl, 3,6-Dioxa-oct-1-yl, 3-Aza-3-methyl-pent-1-yl, 3,6-Diaza-3,6-dimethyl-oct-1-yl, 3-Thiapent-1-yl, Cyclopentyl, Cyclohexyl und Phenyl.

Erfindungsgemäß ist es von ganz besonderem Vorteil, wenn es sich bei den Resten $R^3$ und $R^4$ um Wasserstoffatome und bei den Resten $R^1$ und $R^2$ um Methyl und/oder Ethyl handelt.

Die Einführung der Reste, welche zur (4+2)-Cycloaddition oder Diels-Alder-Reaktion mit Dienophilen befähigt sind, in die selektiv hydrierten Alkadien-Vinylaromat-Copolymerisate, d.h. die Herstellung der erfindungsgemäßen Copolymerisate I, kann nach beliebigen geeigneten an sich bekannten Methoden der präparativen Organischen Chemie und Polymerchemie erfolgen. Indes ist es von ganz besonderem Vorteil, die erfindungsgemäßen Copolymerisate I durch Metallierung der selektiv hydrierten Alkadien-Vinylaromat-Copolymerisate mit statistischem, blockartigem oder sternförmigem Aufbau mit alkalimetallorganischen Verbindungen unter Bildung der betreffenden metallierten, carbanionische Zentren enthaltenden Copolymerisate, Umsetzen der metallierten Copolymerisate mit Fulvenen der allgemeinen Formel II,

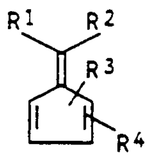

(II),

worin die Reste $R^1$ bis $R^4$ die bei den allgemeinen Formeln Ia bis Ic angegebene Bedeutung haben, unter Bildung des betreffenden Copolymerisats mit Cyclopentadienylanionen in den Seitengruppen, durch Protolyse dieses Copolymerisats, Umsetzen dieses protolysierten Copolymerisats mit einem Dienophil unter Bildung des betreffenden (4+2)-Cycloadditionsproduktes oder Diels-Alder-Addukts und gegebenenfalls Umsetzen dieses Umsetzungsproduktes mit einem Dienophil mit Ammoniak, organischen Aminen, Alkylenoxiden, Polyalkylenoxiden und/oder Kondensationsprodukten von Ammoniak und/oder organischen Aminen mit Alkylenoxiden herzustellen.

In einer weiteren bevorzugten Ausführungsform stellt man die beschriebenen Seitengruppen enthaltenden Alkadien-Vinylaromat-Copolymerisaten mit blockartigem oder sternförmigem Aufbau, deren einpolymerisierte Alkadiencomonomereinheiten selektiv partiell oder vollständig hydriert sind, durch anionische Blockmischpolymerisation von Vinylaromaten und Alkadienen, selektive Hydrierung der erhaltenen Alkadien-Vinylaromat-Copclymerisate, Metallierung der selektiv hydrierten Alkadien-Vinylaromat-Copolymerisate und Umsetzen der hierbei resultierenden, carbanionische Zentren enthaltenden selektiv hydrierten Alkadien-Vinylaromat-Copolymerisate mit Fulvenen II, gefolgt von der Protolyse der hierbei erhaltenen Produkte dadurch her, indem man

($\alpha$) unmittelbar nach der Herstellung der selektiv hydrierten Alkadien-Vnylaromat-Copolymerisats mit blockartigem oder sternförmigem Aufbau in ein und demselben Reaktionsgefäß die bei der Hydrierung verwendete Wasserstoffatmosphäre durch Stickstoff verdrängt, das betreffende Copolymerisat metalliert und das resultierende, carbanionische Zentren enthaltende Produkt mit einem Fulven II umsetzt und

($\beta$) das durch den Verfahrensschritt ($\alpha$) erhaltene Produkt in ein und demselben Reaktionsgefäß protolysiert und gegebenenfalls mit Dienophilen weiter umsetzt.

Hierbei ist es erfindungsgemäß von ganz besonderem Vorteil, 6,6-Dialkylfulvene II, insbesondere 6,6-Dimethylfulven, 6,6-Diethylfulven oder 6-Methyl-6-ethylfulven, zu verwenden.

Beispiele geeigneter alkalimetallorganischer Verbindungen für die Metallierung sind Mischungen aus Organolithiumverbindungen mit Komplexbildnern oder Alkoholaten der Alkalimetalle. Beispiele geeigneter lithiumorganischer Verbindungen sind Methyllithium, Ethyllithium, Propyllithium, n-Butyllithium, sec.-Butyllithium, tert.-Butyllithium und Benzyllithium. Beispiele geeigneter Komplexbildner sind die chelatisierenden Diamine der allgemeinen Formel III

$$R^5_2N-(CH_2)_n-NR^5_2 \quad (III),$$

worin $R^5$ eine Alkylgruppe und n eine ganze Zahl $\geq 2$, insbesondere 2, bedeuten. Ein Beispiel eines besonders gut geeigneten chelatisierenden Diamins ist N,N,N',N'-Tetramethylethylendiamin. Beispiele geeigneter Alkoholate der Alkalimetalle sind Kalium-sec.-butylat und Kalium-tert.-butylat. Bei Verwendung der Alkalimetallalkoholate beträgt das molare Verhältnis von Alkoholat zu lithiumorganischer Verbindung vorzugsweise 0,5 bis 2. Die Komplexbildner werden vorzugsweise im 1- bis 50fachen überschuß verwendet.

Im allgemeinen wird die Metallierung in einem inerten Lösungsmittel, insbesondere in gesättigten Kohlenwasserstoffen wie Hexan, Cyclohexan, Methylcyclohexan oder Dekalin, unter Stickstoffatmosphäre bei Temperaturen zwischen 0 und 120°C, insbesondere 25 bis 75°C, durchgeführt. Hierbei liegt das Gewichtsverhältnis von Lösungsmittel zu selektiv hydriertem Alkadien-Vinylaromat-Copolymerisat vorzugsweise bei 2:1 bis 20:1. Indes kann dieses Verhältnis breiter variieren, wenn es für die jeweilige Metallierungsreaktion von Vorteil ist. Die Menge der alkalimetallorganischen Verbindung hängt einerseits vom Molekulargewicht des jeweils verwendeten selektiv hydrierten Alkadien-Vinylaromat-Copolymerisats und andererseits vom angestrebten Metallierungs- bzw. Substitutionsgrad ab. Vorteilhafterweise werden 4 bis 100 Äquivalente alkalimetallorganischer Verbindung verwendet, so daß bei vollständigem Umsatz 4 bis 100 carbanionische Zentren und letztlich 4 bis 100 Seitengruppen in die Polymerhauptkette(n) eingeführt werden. Selbstverständlich können auch größere Mengen an alkalimetallorganischer Verbindung angewandt werden, wenn ein höherer Metallierungsgrad gewünscht ist und/oder wenn es für die betreffende Umsetzung von Vorteil ist.

Für die Umsetzung der metallierten, carbanionische Zentren enthaltenden selektiv hydrierten Alkadien-Vinylaromat-Copolymerisate mit den Fulvenen II werden im allgemeinen 0,2 bis 10 Äquivalente mindestens eines Fulvens II je Äquivalent alkalimetallorganischer Verbindung angewandt. Erfindungsgemäß ist es von Vorteil, wenn das Verhältnis von alkalimetallorganischer Verbindung zu Fulven II bei 1:5 bis 5:1 liegt. Indes ist die Verwendung äquimolarer Mengen aus verfahrenstechnischen und wirtschaftlichen Gründen erfindungsgemäß von Vorteil. Die Umsetzung kann im Temperaturbereich von -80 bis 180°C durchgeführt werden. Erfindungsgemäß von Vorteil ist es, Reaktionstemperaturen zwischen 0 und 80°C zu wählen.

Durch die Addition der Fulvene II an die carbanionischen Zentren der metallierten selektiv hydrierten Alkadien-Vinylaromat-Copolymerisate entstehen Seitengruppen, welche Cyclopentadienylanionen enthalten. Diese werden nach Beendigung der Reaktion in Lösung mit einem überschuß protischer Verbindungen wie Wasser, Alkohol oder Säuren protoniert. Hierdurch bilden sich aus den Cyclopentadienylanionen die vorstehend im Detail beschriebenen Reste der allgemeinen Formeln Ia bis Ic.

Die Herstellung der erfindungsgemäßen Copolymerisate I gelingt überraschenderweise in Ausbeuten von mehr als 80 %, bezogen auf äquimolare Mengen der angewandten Fulvene II. Darüberhinaus kommt es, wenn überhaupt, nur in einem geringen Ausmaß zu Nebenreaktionen. Die Herstellung der erfindungsgemäßen Copolymerisate I in erfindungsgemäßer Verfahrensweise führt deshalb zu besonders vorteilhaften Produkten mit ausgezeichneten anwendungstechnischen Eigenschaften.

Die erfindungsgemäßen Copolymerisate I, insbesondere die in erfindungsgemäßer Verfahrensweise hergestellten, sind ausgezeichnete VI-Verbesserer für Mineral- und Schmieröle, insbesondere Motor- und Getriebeöle. Vor allem aber dienen sie der Herstellung neuer dispergierender VI-Verbesserer, der erfindungsgemäßen Copolymerisate II und III.

Die erfindungsgemäßen Copolymerisate II enthalten mindestens eine Seitengruppe mit mindestens einem Rest, welcher durch (4+2)-Cycloaddition nach Diels-Alder eines der vorstehend im Detail beschriebenen Dienreste mit mindestens einem Dienophil hergestellt worden ist.

Zwar können die erfindungsgemäßen Copolymerisate II nach beliebigen Methoden der Polymerchemie hergestellt werden, indes empfiehlt es sich, sie durch die Umsetzung der vorstehend im Detail beschriebenen erfindungsgemäßen Copolymerisate I mit Dienophilen herzustellen, wobei sich in den Seitengruppen die betreffenden (4+2)-Cycloadditionsprodukte oder die Diels-Alder-Addukte bilden.

Für die Herstellung der erfindungsgemäßen Copolymerisate II in erfindungsgemäßer Verfahrensweise kommen grundsätzlich alle Dienophile in Betracht, welche in der Lage sind (4+2)-Cycloadditionen oder die Diels-Alder-Reaktion einzugehen. Hierbei sind vor allem die elektronenarmen, insbesondere die olefinisch und acetylenisch ungesättigten, Dienophile erfindungsgemäß von Vorteil. Weitere Vorteile ergeben sich, wenn die Dienophile stark polare funktionelle Gruppen enthalten. Ganz besonders vorteilhaft sind hierbei polare funktionelle Gruppen wie Säuregruppen, Säuregruppen liefernde funktionelle Gruppen, Ketogruppen oder Aldehydgruppen, wobei Säuregruppen, insbesondere Carboxylgruppen, und Säuregruppen liefernde funktionelle Gruppen, insbesondere Carbonsäureanhydrid-, Carbonsäurechlorid- oder Carbonsäureestergruppen, erfindungsgemäß von ganz besonderem Vorteil sind und daher ganz besonders bevorzugt angewandt werden.

Beispiele erfindungsgemäß geeigneter Dienophile sind

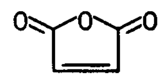 ,

$H_3COOC\text{-}CH{=}CH\text{-}COOCH_3$, $NC\text{-}CH{=}CH\text{-}CN$, $HOOC\text{-}CH{=}CH\text{-}Cl$, $HOOC\text{-}CH{=}CH\text{-}Br$, $HOOC\text{-}CH{=}CH\text{-}I$, $HOOC\text{-}CH{=}CH\text{-}SO_2C_6H_5$, $C_6H_5OC\text{-}CH{=}CH\text{-}COC_6H_5$, $C_6H_5OC\text{-}CH{=}CH\text{-}SO_2C_6H_5$,

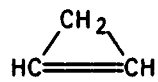 , 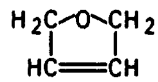 ,

Bicyclo-[2,2,1]-heptadien, $CH_2{=}CH\text{-}COOH$, $CH_2{=}CH\text{-}COOCH_3$, $CH_2{=}CH\text{-}CONH_2$, $CH_2{=}CH\text{-}CN$, $CH_2{=}CH\text{-}CHO$, $CH_2{=}CH\text{-}CH_3$, $CH_2{=}CH\text{-}CH_2OH$, $CH_2{=}CH\text{-}CH_2Br$, $CH_2{=}CH\text{-}OOCCH_3$, $CH_2{=}CH\text{-}B(OC_4H_9)_2$, $CH_2{=}CH\text{-}SOC_2H_5$, p-Benzochinon, 1,4-Naphthochinon, 3,6-Diphenyl-1,2,4,5-tetrazin, trans-3-Oxo-1-benzolsulfonyl-3-phenyl-propen, $CH_3OOC\text{-}C{\equiv}C\text{-}COOCH_3$, $C_2H_5OOC\text{-}C{\equiv}C\text{-}COOC_2H_5$, $C_6H_5OOC\text{-}C{\equiv}C\text{-}COOC_6H_5$ und Maleinsäureimide, welche sich von Maleinsäure und Aminen der allgemeinen Formel IV ableiten,

$$H_2N{+}CH_2{+}_n\left[NH{+}CH_2{+}_n\right]_m NH_2 \qquad (IV)$$

worin der Index n für eine ganze Zahl ≥ 2 und der Index m für 0 oder eine ganze Zahl ≥ 1 stehen.

Von diesen sind Maleinsäureanhydrid, Benzochinon, Acrylamid, Acetylendicarbonsäuredimethylester und die Maleinsäureimide, welche sich von Maleinsäure und den Aminen IV ableiten, erfindungsgemäß besonders vorteilhaft und werden deshalb besonders bevorzugt verwendet. Von diesen wiederum ist Maleinsäureanhydrid erfindungsgemäß von ganz besonderem Vorteil.

Erfindungsgemäß ist es von Vorteil, die Dienophile bei Temperaturen von 0 bis 200°C, vorzugsweise in inerten Lösungsmitteln wie aromatische oder aliphatische Kohlenwasserstoffe, insbesondere Cyclohexan oder Toluol, mit den erfindungsgemäßen Copolymerisaten I zu den erfindungsgemäßen Copolymerisaten II umzusetzen. Vorteilhafterweise werden hierbei für jeden zur (4+2)-Cycloaddition oder Diels-Alder-Reaktion befähigten Rest, insbesondere je Rest Ia bis Ic, 1 bis 10 Äquivalente des Dienophils verwendet. Da es sich bei der (4+2)-Cycloaddition um eine stöchiometrische 1:1-Reaktion handelt, dient der Überschuß des Dienophils lediglich dazu, die Reaktion zu beschleunigen und einen vollständigen Umsatz aller Dienreste sicherzustellen. Werden weniger reaktive Dienophile angewandt, kann deren Reaktivität durch den Zusatz von Lewis-Säuren wie Zinkchlorid zum Reaktionsmedium stark angehoben werden.

Die erfindungsgemäßen Copolymerisate II, insbesondere die in erfindungsgemäßer Verfahrensweise hergestellten, weisen besondere Vorteile auf. So sind sie ausgezeichnete dispergierende VI-Verbesserer in Mineral- und Schmierölen, insbesondere Motor- und Getriebeölen. In dieser Funktion machen sie die Anwendung spezieller Dispergatoren obsolet. Desweiteren dienen sie der Herstellung der erfindungsgemäßen Copolymerisate III.

Die erfindungsgemäßen Copolymerisate III können nach beliebigen Methoden der Polymerchemie und der präparativen Organischen Chemie hergestellt werden. Erfindungsgemäß ist es indes von Vorteil, sie nach dem erfindungsgemäßen Verfahren aus den erfindungsgemäßen Copolymerisaten II, welche die vorstehend genannten stark polaren funktionellen Gruppen enthalten, durch weitere polymeranaloge Reaktionen mit geeigneten Verbindungen herzustellen. Hierbei richtet sich die Auswahl der erfindungsgemäß für die weitere polymeranaloge Reaktion geeigneten Verbindungen einerseits danach, welche weitere polare funktionelle Gruppen mit dispergierender Wirkung in die erfindungsgemäßen Copolymerisate II eingebaut werden bzw. in den erfindungsgemäßen Copolymerisaten III vorhanden sein sollen, andererseits richtet sich die Auswahl nach den stark polaren funktionellen Gruppen in den Seitengruppen der erfindungsgemäßen Copolymerisate II, welche zur Reaktion gebracht werden sollen. Die Auswahl kann deshalb vom Fachmann in einfacher Weise getroffen werden. So kann er beispielsweise in den Seitengruppen der erfindungsgemäßen Copolymerisate II vorhandene Iminogruppen durch weitere polymeranaloge Reaktionen in primäre oder sekundäre Aminogruppen umwandeln. Außerdem kann er in den erfindungsgemäßen Copolymerisaten II vorhandene Carboxylgruppen durch Umsetzung mit geeigneten Aminen in Amid- oder Imidstrukturen umwandeln. Des weiteren kann er in den erfindungsgemäßen Copolymerisaten II vorhandene Estergruppen mit Hilfe geeigneter Verbindungen in Amidgruppen umwandeln. Sind Keto- oder Aldehydgruppen in den Seitengruppen der erfindungsgemäßen Copolymerisate II zugegen, können diese durch Reaktion mit geeigneten Aminen in Iminogruppen umgewandelt werden.

Beispiele geeigneter Verbindungen für die erfindungsgemäße Herstellung der erfindungsgemäßen Copolymerisate III aus den erfindungsgemäßen Copolymerisaten II sind Ammoniak, die vorstehend im Detail beschriebenen Amine der allgemeinen Formel IV, Alkylenoxide wie Ethylen- und Propylenoxid sowie Kondensationsprodukte von Ammoniak und organischen Aminen mit Alkylenoxiden, insbesondere mit Ethylen- und/oder Propylenoxid, der allgemeinen Formeln V, VI und VII,

$$R^5NQ_2 \qquad (V)$$

$$NQ_3 \qquad (VI)$$

worin der Rest $R^5$ die bei der allgemeinen Formel III sowie die Indices n und m, die bei der allgemeinen Formel IV jeweils angegebene Bedeutung haben und worin der Rest Q für ein Wasserstoffatom, 2-Hydroxy-eth-1-yl oder 2-Hydroxy-prop-1-yl steht.

Beispiele gut geeigneter erfindungsgemäß anzuwendender Verbindungen V, VI und VII sind $HO\text{-}CH_2\text{-}CH_2\text{-}NH_2$, $(HO\text{-}CH_2\text{-}CH_2\text{-})_2NH$, $(HO\text{-}CH_2\text{-}CH_2\text{-})_3N$, $CH_3\text{-}NH\text{-}CH_2\text{-}CH_2OH$, $CH_3\text{-}CH_2\text{-}NH\text{-}CH_2\text{-}CH_2\text{-}OH$, $CH_3\text{-}CH_2\text{-}CH_2\text{-}NH\text{-}CH_2\text{-}CH_2\text{-}OH$, $H_2N\text{-}(CH_2)_6\text{-}NH\text{-}CH_2\text{-}CH_2\text{-}OH$, $(HO\text{-}CH_2\text{-}CH_2)_2N\text{-}(CH_2)_6\text{-}NH\text{-}CH_2\text{-}CH_2\text{-}OH$ und

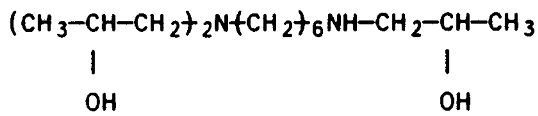

Weitere Beispiele gut geeigneter Verbindungen für die Herstellung der erfindungsgemäßen Copolymerisate III aus den erfindungsgemäßen Copolymerisaten II sind Polyalkylenoxide, insbesondere Polyethylenoxid und Polypropylenoxid.

Zum Zwecke der Herstellung der erfindungsgemäßen Copolymerisate III werden mindestens eine der vorstehend genannten geeigneten Verbindungen und das erfindungsgemäße Copolymerisat II zusammen in einem inerten Lösungsmittel, vorteilhafterweise in aromatischen oder aliphatischen Kohlenwasserstoffen, für mehrere Stunden erhitzt. Hierbei können gegebenenfalls niedermolekulare Kondensationsprodukte wie Wasser destillativ aus dem Reaktionsgemisch entfernt werden. Die Reaktionstemperaturen und die Reaktionszeiten können dabei sehr unterschiedlich sein und werden der jeweiligen Reaktivität der Ausgangskomponenten angepaßt. Erfindungsgemäß ist es von Vorteil, Temperaturen zwischen 0 und 120°C und Reaktionszeiten von 5 min bis 8 h anzuwenden. Um einen vollständigen Umsatz zu erzielen, werden die vorstehend genannten geeigneten Verbindungen in einem 2- bis 10fachen Überschuß, bezogen auf die betreffenden reaktiven Zentren in dem jeweiligen erfindungsgemäßen Copolymerisat II angewandt. Nach der Reaktion werden die überschüssigen geeigneten Verbindungen durch übliche und bekannte Trennmethoden von dem erfindungsgemäßen Copolymerisat III abgetrennt.

Hierbei ist es erfindungsgemäß von besonderem Vorteil, die erfindungsgemäßen Copolymerisate II zunächst mit den vorstehend beschriebenen Aminen oder mit Ammoniak und anschließend mit mindestens einem Alkylenoxid zu den erfindungsgemäßen Copolymerisaten III umzusetzen.

Die erfindungsgemäßen Copolymerisate III, insbesondere die in erfindungsgemäßer Verfahrensweise hergestellten, sind hervorragende VI-Verbesserer für Mineral- und Schmieröle, insbesondere Motor- und Getriebeöle, und weisen in dieser Anwendung eine ausgezeichnete dispergierende Wirkung auf.

Motoren und Getriebe, welche mit Motor- bzw. Getriebeölen geschmiert werden, die die erfindungsgemäßen Copolymerisate I, II und/oder III enthalten, weisen einen deutlich geringeren Schmierstoffverbrauch, deutlich längere Abstände zwischen den Wartungszeiten und eine deutlich längere Gebrauchsdauer auf als Motoren und Getriebe, welche mit herkömmlichen Schmiermitteln geschmiert sind.

Überdies sind die erfindungsgemäßen Copolymerisate I, II und III in einfacher und eleganter Weise mit Hilfe des erfindungsgemäßen Eintopfverfahrens zugänglich, d.h., daß

- die Polymerisation, insbesondere die anionische Polymerisation unter Bildung des blockartigen oder sternförmigen Alkadien-Vinylaromat-Copolymerisats,
- die selektive Hydrierung des Alkadien-Vinylaromat-Copolymerisats,
- dessen Metallierung und
- die Umsetzung mit elektrophilen Verbindungen wie den Fulvenen II unter Bildung der erfindungsgemäßen Copolymerisate I,

- die Umsetzung der erfindungsgemäßen Copolymerisate I mit Dienophilen unter Bildung der erfindungsgemäßen Copolymerisate II und

- deren Umsetzung mit geeigneten Verbindungen zu den erfindungsgemäßen Copolymerisaten III

als Eintopfreaktion in ein und demselben Reaktionsgefäß durchgeführt werden kann. Hierdurch wird die hohe Attraktivität der erfindungsgemäßen Copolymerisate I, II und III, welche wegen ihres vorteilhaften anwendungstechnischen Eigenschaftsprofils ohnedies schon gegeben ist, noch weiter gesteigert.

Beispiele

In den folgenden Beispielen wurden die Molekulargewichte der Alkadien-Vinylaromat-Copolymerisate durch Gelpermeationschromatographie bestimmt. Als Eichsubstanzen zur Kalibrierung der mit Ultrastyragel 500, 1000 und 10000 gefüllten Säulen dienten Polystyrole verschiedener Molmassen. Die mobile Phase war Tetrahydrofuran. Zur Berechnung der zahlenmittleren Molekulargewichte $\overline{M}_n$ wurde ein GPC-Software-System der Firma Polymer-Standard-Service (Mainz, BRD) verwendet.

Der Doppelbindungsgehalt der Alkadien-Vinylaromat-Copolymerisate wurde in üblicher und bekannter Weise durch iodometrische Titration bestimmt.

Die kinematische Viskosität ($mm^2/s$, früher cSt) wurde in üblicher und bekannter Weise an 1,5 %igen Lösungen im Grundöl SN 200 im Kapillarviskosimeter gemessen.

Der Scher-Stability-Index SSI und der Scherverlust wurden nach DIN 51 382 durch Viskositätsmessungen an den 1,5 %igen Lösungen im Grundöl SN 200 vor und nach 30maligem Durchgang durch eine Dieseleinspritzdüse bestimmt.

Der Viskositätsindex wurde anhand der Temperatur-Viskositäts-Funktion der besagten 1,5 %igen Lösungen in üblicher und bekannter Weise ermittelt.

Zur Beurteilung der Dispergierwirkung der Polymerisate wurde der Tüpfeltest wie er beispielsweise von A. Schilling in "Les Huiles pour Moteurs et le Graissage des Moteurs", Band 1, Seiten 84 und folgende, 1962, beschrieben wird, herangezogen. Dazu stellte man Lösungen der erfindungsgemäßen Copolymerisate I, II und III in unlegierten Grundölen her und versetzte diese Lösungen mit 5 Gew.% eines Öls, welches in einem Motortest mit Ruß und anderen Verbrennungsrückständen beladen worden war. Um den Einfluß von Wasser zu prüfen, wurden 1 Gew.% Wasser zugesetzt. Die Temperaturabhängigkeit der Dispergierwirkung der erfindungsgemäßen Copolymerisate I, II und III wurde nach 10minütigem Erhitzen auf 250°C geprüft. Zum Zwecke der Prüfung selbst wurden die Öle auf ein Vliespapier (Filterpapier) aufgebracht und wie ein Chromatogramm während 24 h entwickelt. Hiernach wurden die Laufradien von verteiltem Ruß und von reinem Laufmittel (Öl) verglichen, und es wurde das prozentuale Verhältnis dieser Radien gebildet.

Für die nachfolgenden Beispiele 1 bis 19 wurden die folgenden Ausgangsverbindungen hergestellt:

1. 6,6-Dimethylfulven
Herstellvorschrift:
660 g frisch destilliertes Cyclopentadien und 580 g Aceton wurden in einem 4 l-Dreihalskolben bei 5°C tropfenweise mit 200 ml einer 20 %igen Lösung von Kaliumhydroxid in Ethanol versetzt. Die resultierende Reaktionsmischinng wurde nach Beendigung der Zugabe während 24 h bei 0°C gerührt. Im Anschluß daran wurde die Reaktionsmischinng mit Wasser extrahiert, wonach die hierbei erhaltene organische Phase getrocknet und fraktioniert destilliert wurde. Hierbei erhielt man bei einer übergangstemperatur von 45 bis 48°C und einem Druck von 7 bis 8 mbar 690 g einer gelb-orangefarbenen Flüssigkeit, welche im Eisschrank auskristallisierte.

2. Isopren-Styrol-Blockmischpolymerisat
Herstellvorschrift:
In einem unter Reinstickstoff mit einer Lösung von n-Butyllithium in Cyclohexan gespülten thermostatisierten 10 l-Reaktionsgefäß, welches mit Rührer und Thermometer versehen war, wurden 5000 ml Cyclohexan und 1 ml 1,1-Diphenyl-ethylen vorgelegt. Zu dieser Lösung wurde bei 30°C mit einer Injektionsspritze unter gutem Rühren solange eine 0,2 molare Lösung von sec.-Butyllithium in Hexan zugegeben, bis eine bleibende schwache Gelbfärbung entstand. Daraufhin wurden 10 mmol sec.-Butyllithium, und 750 g Isopren hinzugegeben. Hierbei stieg die Temperatur an und wurde durch Kühlung bei 60°C gehalten. Die resultierende Reaktionsmischung wurde während 1 h bei 60°C gerührt und danach für eine weitere Stunde auf 70°C erhitzt. Nach der schnellen Zugabe von 250 g Styrol wurde die Lösung weitere 30 min bei 60°C gerührt. Im Anschluß daran wurde das lebende Blockmischpolymerisat mit 0,5 ml Wasser desaktiviert. Zu seiner Charakterisierung wurde eine Probe entnommen und in Ethanol ausgefällt. Die gelpermeationschromatographischen Messungen ergaben ein Molekulargewicht von 1,6 x $10^5$ g/mol, was einem zahlenmittleren Molekulargewicht $\overline{M}_n$ von $10^5$ g/mol entsprach. Die Dispersität $\overline{M}_w/\overline{M}_n$ lag bei

1,07.

3. Butadien-Styrol-Blockmischpolymerisat mit einem 1,2-Anteil von 57 % und einem Styrolgehalt von 25 Gew.%
Herstellvorschrift:
In einem unter Reinstickstoff mit einer Lösung von n-Butyllithium in Cyclohexan gespülten thermostatisierten 10 l-Reaktionsgefäß, welches mit Rührer und Thermometer versehen war, wurden 5000 ml Cyclohexan, 26 ml Tetrahydrofuran und 250 g Styrol vorgelegt. Zu dieser Lösung wurde bei 50°C mit einer Injektionsspritze unter gutem Rühren solange eine 0,2 molare Lösung von sec.-Butyllithium in Hexan zugegeben, bis eine bleibende schwache Gelbfärbung entstand. Daraufhin wurden 10 ml 1n sec.-Butyllithium-Lösung in Cyclohexan zugesetzt. Hierbei stieg die Temperatur des Reaktionsgemischs auf 75°C an. Die Reaktionsmischung wurde bei dieser Temperatur während 1 h gerührt, auf 30°C abgekühlt und danach mit 1150 ml (750 g) Butadien versetzt. Man ließ die Temperatur des resultierenden Reaktionsgemischs auf 50°C ansteigen und erhitzte es hiernach während 1 h auf 60°C. Nach einer weiteren Stunde bei 60°C wurde das resultierende lebende Butadien-Styrol-Blockmischpolymerisat mit 0,5 ml Wasser desaktiviert. Die gelpermeationschromatographischen Messungen ergaben ein Molekulargewicht von $1,5 \times 10^5$ g/mol, was einem zahlenmittleren Molekulargewicht $\overline{M}_n$ von $1,03 \times 10^5$ g/mol entsprach.

4. Statistisches Butadien-Styrol-Copolymerisat
Herstellvorschrift:
In einem 12 l-Stahlkessel wurden 7,7 l Cyclohexan, 20 ml Tetrahydrofuran, 480 g Butadien und 520 g Styrol unter Stickstoff vorgelegt und bei 30°C mit 5 mmol sec.-Butyllithium auf eine schwach rote Färbung titriert. Hierbei erfolgte die Kontrolle über eine Titrationssonde. Im Anschluß daran wurden 10 ml 1n sec.-Butyllithium-Lösung in Hexan zugegeben. Hiernach stieg die Temperatur des Reaktionsgemisches stark an und erreichte nach 10 min ein Maximum von 123°C. Danach wurde die Reaktionsmischung auf 60°C abgekühlt und zum Zwecke der Desaktivierung mit 4 ml Wasser versetzt. Das hierbei resultierende statistische Butadien-Styrol-Copolymerisat wies ein durch GPC ermitteltes Molekulargewicht von $1,65 \times 10^5$ g/mol auf, was einem zahlenmittleren Molekulargewicht $\overline{M}_n$ von $1,1 \times 10^5$ g/mol entsprach.

5. Die selektiv hydrierten Isopren-Styrol- und Butadien-Styrol-Blockmischpolymerisate und das selektiv hydrierte statistische Butadien-Styrol-Copolymerisat
Allgemeine Herstellvorschrift:
Die Hydrierung erfolgte nach dem Transfer der betreffenden Polymerlösungen in einem 12 l-Hydrierkessel mit 1,48 g Nickel(II)-acetylacetonat und 34 ml Aluminiumtriisobutyl (20 gew.%ig in Hexan) bei einem Wasserstoffdruck von 20 bar und einer Temperatur von 85 bis 130°C. In der Anfangsphase verliefen die Reaktionen sehr rasch, was sich an dem steilen Temperaturanstieg auf 90 bis 130°C bemerkbar machte. Hiernach verloren die Hydrierungen deutlich an Geschwindigkeit. Nach 10 bis 24 h wurden Doppelbindungsgehalte von unter 5 % erreicht, wonach die Hydrierungen abgebrochen wurden. Nach der Verdrängung der Wasserstoffatmosphäre wurden die Metallkatalysatoren durch Zusatz von jeweils 9 g 30 %igem Wasserstoffperoxid, 100 ml Wasser und 5 ml Essigsäure oxidiert. Nach der Abtrennung der oxidierten Katalysatoren wurden die selektiv hydrierten Blockmischpolymerisate und das selektiv hydrierte statistische Copolymerisat mit Ethanol ausgefällt.

Beispiele 1 bis 3

Die Herstellung der erfindungsgemäßen Copolymerisate I

Allgemeine Herstellvorschrift:

Für das Beispiel 1 wurde das vorstehend beschriebene selektiv hydrierte Isopren-Styrol-Blockmischpolymerisat, für das Beispiel 2 das vorstehend beschriebene selektiv hydrierte Butadien-Styrol-Blockmischpolymerisat und für das Beispiel 3 das vorstehend beschriebene selektiv hydrierte statistische Butadien-Styrol-Copolymerisat verwendet.

Jeweils 500 g dieser Polymerisate wurden unter Stickstoffatmosphäre in 5 l Cyclohexan gelöst und mit 0,5 g 1,1-Diphenylethylen versetzt. Die resultierende Reaktionsmischung wurde mit 1n n-Butyllithiumlösung in Hexan bis zum Erreichen einer schwach gelben Färbung titriert. Unmittelbar im Anschluß daran erfolgte die Zugabe von 50 mmol n-Butyllithium als 1n Lösung in Hexan und von 5,7 g (50 mmol) Kalium-tert.-bintanolat. Die resultierende Reaktionsmischung wurde unter intensivem Rühren für 2 h auf 70°C erhitzt, wobei sich die Farbe der jeweiligen Reaktionsmischung von hellgelb nach dunkelrot hin veränderte. Hiernach wurden die Reaktionsgemische auf 40°C abgekühlt und mit jeweils 8 g (60 mmol) 6,6-Dimethylfinlven versetzt. Hierbei änderte sich die Farbe der Reaktionsmischungen von dunkelrot nach gelb. Man ließ die Reaktionsmischungen 1 h nachrühren, wonach die erfindungsgemäßen Copolymerisate I in Methanol ausgefällt und unter Vakuum bei 50°C getrocknet wurden.

Die in dieser Weise hergestellten erfindungsgemäßen Copolymerisate I der Beispiele 1 bis 3 waren sehr gute VI-Verbesserer für Mineral- und Schmieröle, insbesondere Motor- und Getriebeöle. Außerdem waren sie hervorragend für die Herstellung der erfindungsgemäßen Copolymerisate II geeignet.

Beispiele 4 bis 6

Die Herstellung der erfindungsgemäßen Copolymerisate II

Allgemeine Herstellvorschrift:

Für die Herstellung des erfindungsgemäßen Copolymerisats II des Beispiels 4 wurde das erfindungsgemäße Copolymerisat I des Beispiels 1, für die Herstellung des erfindungsgemäßen Copolymerisats II des Beispiels 5 wurde das erfindungsgemäße Copolymerisat I des Beispiels 2 und für die Herstellung des erfindungsgemäßen Copolymerisats II des Beispiels 6 wurde das erfindungsgemäße Copolymerisat I des Beispiels 3 verwendet.

Jeweils 500 g der erfindungsgemäßen Copolymerisate I wurden in 2 l Toluol gelöst, mit 24,5 g Maleinsäureanhydrid versetzt und während 2 h am Rückfluß erhitzt. Hiernach ließ man die betreffenden Reaktionsmischungen abkühlen, wonach man die jeweiligen resultierenden erfindungsgemäßen Copolymerisate II in jeweils 8 l Ethanol ausfällte und im Vakuum bei 50°C trocknete.

Die erfindungsgemäßen Copolymerisate II der Beispiele 4 bis 6 waren sehr gute bis ausgezeichnete VI-Verbesserer für Mineral- und Schmieröle, insbesondere Motor- und Getriebeöle. Hierbei wiesen sie eine voll befriedigende bis gute dispergierende Wirkung auf. Insbesondere eigneten sie sich hervorragend für die Herstellung der erfindungsgemäßen Copolymerisate III.

Beispiele 7 bis 9

Die Herstellung der erfindungsgemäßen Copolymerisate III

Allgemeine Herstellvorschrift:

Für die Herstellung des erfindungsgemäßen Copolymerisats III des Beispiels 7 wurde das erfindungsgemäße Copolymerisat II des Beispiels 4, für das erfindungsgemäße Copolymerisat III des Beispiels 8 wurde das erfindungsgemäße Copolymerisat II des Beispiels 5 und für das erfindungsgemäße Copolymerisats III des Beispiels 9 wurde das erfindungsgemäße Copolymerisat II des Beispiels 6 verwendet.

Jeweils 100 g der erfindungsgemäßen Copolymerisate II der Beispiele 4 bis 6 wurden in jeweils 0,5 l Toluol gelöst, mit 100 mmol Triethylentetramin versetzt und während 8 h auf 100°C erhitzt. Anschließend wurden die hierbei resultierenden erfindungsgemäßen Copolymerisate III in jeweils 3 l Ethanol ausgefällt, getrocknet, nochmals in jeweils 0,5 l Toluol gelöst und hiernach wieder aus Ethanol ausgefällt. Nach dem Trocknen der erfindungsgemäßen Copolymerisate III wurden ihre anwendungstechnischen Eigenschaften wie vorstehend beschrieben untersucht. Die hierbei erhaltenen Ergebnisse wurden in der Tabelle im Überblick zusammengestellt.

Beispiele 10 bis 12

Die Herstellung der erfindungsgemäßen Copolymerisate III

Allgemeine Herstellvorschrift:

Für die Herstellung des erfindungsgemäßen Copolymerisats III des Beispiels 10 wurde das erfindungsgemäße Copolymerisat II des Beispiels 4, für die Herstellung des erfindungsgemäßen Copolymerisat III des Beispiels 11 das erfindungsgemäße Copolymerisat II des Beispiels 5 und für die Herstellung des erfindungsgemäßen Copolymerisats III des Beispiels 12 das erfindungsgemäße Copolymerisat II des Beispiels 6 verwendet.

Die Beispiele 7 bis 9 wurden wiederholt, nur daß anstelle des Triethylentetramins Triethanolamin verwendet wurde.

Die anwendungstechnischen Eigenschaften der hierbei resultierenden erfindungsgemäßen Copolymerisate III wurden wie vorstehend angegeben ermittelt, und die hierbei erhaltenen Resultate wurden gleichfalls in der Tabelle im Überblick zusammengestellt.

Beispiele 13 bis 15

Die Herstellung der erfindungsgemäßen Copolymerisate III

Allgemeine Herstellvorschrift:

Für die Herstellung des erfindungsgemäßen Copolymerisats des Beispiels 13 wurde das erfindungsgemäße Copolymerisat II des Beispiels 4, für die Herstellung des erfindungsgemäßen Copolymerisats III des Beispiels 14 wurde das erfindungsgemäße Copolymerisat II des Beispiels 5 und für die Herstellung des erfindungsgemäßen Copolymerisats III des Beispiels 15 wurde das erfindungsgemäße Copolymerisat II des Beispiels 6 verwendet.

Die Beispiele 7 bis 9 wurden wiederholt, nur daß anstelle des Triethylentetramins Diethanolamin verwendet wurde.

Die anwendungstechnischen Eigenschaften der hierbei resultierenden erfindungsgemäßen Copolymerisate III wurden wie vorstehend beschrieben bestimmt, und die hierbei erhaltenen Ergebnisse wurden ebenfalls in der Tabelle zusammengestellt.

Beispiele 16 bis 18

Die Herstellung der erfindungsgemäßen Copolymerisate III

Allgemeine Herstellvorschrift:

Für die Herstellung des erfindungsgemäßen Copolymerisats des Beispiels 16 wurde das erfindungsgemäße Copolymerisat II des Beispiels 4, für die Herstellung des erfindungsgemäßen Copolymerisats III des Beispiels 17 wurde das erfindungsgemäße Copolymerisat II des Beispiels 5 und für die Herstellung des erfindungsgemäßen Copolymerisats III des Beispiels 18 wurde das erfindungsgemäße Copolymerisat II des Beispiels 6 verwendet.

Die Beispiele 7 bis 9 wurden wiederholt, nur daß anstelle des Triethylentetramins Ethanolamin verwendet wurde.

Die anwendungstechnischen Eigenschaften der hierbei resultierenden erfindungsgemäßen Copolymerisate III wurden gleichfalls wie vorstehend beschrieben ermittelt. Die hierbei erhaltenen Werte finden sich ebenfalls in der Tabelle.

Beispiel 19

Die Herstellung eines erfindungsgemäßen Copolymerisats III in einer Eintopfreaktion

Herstellvorschrift:

In einem unter Reinstickstoff mit einer Lösung von n-Butyllithium in Dekalin gespülten, thermostatisierten 10 l-Stahlreaktor, welcher mit Rührer und Thermometer versehen war, wurden 5 l Dekalin, 26 ml Tetrahydrofuran und 250 g Styrol vorgelegt. Bei 50°C wurde mit einer Injektionsspritze unter gutem Rühren solange 0,2 molare Lösung von sec.-Butyllithium zu der Lösung hinzugegeben, bis diese eine bleibende schwache Gelbfärbung aufwies. Daraufhin wurden 10 ml 1n sec.-Butyllithium-Lösung in Hexan zugesetzt. Die resultierende Reaktionsmischinng wurde 1 h bei 50°C gerührt und hiernach auf 30°C abgekühlt. Bei dieser Temperatur wurde sie mit 1150 ml (750 g) Butadien versetzt. Hiernach ließ man die Temperatur der resultierenden Reaktionsmischung auf 50°C ansteigen. Man beließ die Reaktionsmischung 1 h bei dieser Temperatur und erhitzte sie dann auf 60°C. Hiernach wurden 0,3 g Wasser als 5 gew.%ige Lösung in Tetrahydrofuran zugesetzt. Man rührte die resultierende Reaktionsmischung 5 min nach und setzte dann 0,148 g Nickel(II)-acetylacetonat und 3,4 ml Aluminiumtriisobutyl (20 gew.%ig in Hexan) zu und preßte Wasserstoff mit einem Druck von 20 bar auf. Im Anschluß daran wurde die Reaktionsmischung während 24 h bei 95°C gerührt. Nach dieser Zeit war ein Restdoppelbindinngsgehalt von weniger als 5 % erreicht. Nun wurde der Wasserstoff abgelassen und durch eine Stickstoffatmosphäre ersetzt. In ein und demselben Reaktionsgefäß gab man dann 100 mmol n-Butyllithium als 1n Lösung in Hexan und 11,4 g (100 mmol) Kalium-tert.-butanolat zu und erhitzte die resultierende Reaktionsmischung für 2 h auf 70°C. Hiernach wurde eine 3 molare Lösung von 100 mmol 6,6-Dimethylfulven in Dekalin unter intensivem Rühren bei 40°C zu der Reaktionsmischung hinzugegeben. Man ließ 10 min nachrühren und leitete anschließend während 10 min Chlorwasserstoff ein. Hiernach wurde der überschüssige Chlorwasserstoff im Vakuum abgezogen.

Immer noch in ein und demselben Reaktionsgefäß wurde die Lösung des erfindungsgemäßen Copolymerisats I mit 29,6 g Maleinsäureanhydrid versetzt und während 4 h bei 90°C gerührt. Hiernach wurde das überschüssige Maleinsäureanhydrid bei 90°C im Ölpumpenvakuum abdestilliert. Die hierbei resultierende Lösung des erfindungsgemäßen Copolymerisats II wurde immer noch in ein und demselben Reaktionsgefäß mit 300 mmol Triethylentetramin versetzt und nochmals für 4 h auf 100°C erhitzt. Nach Abschluß der Reaktion wurde das erfindungsgemäße Copolymerisat III mit Ethanol ausgefällt.

Die anwendungstechnischen Eigenschaften des in dieser Weise in einer Eintopfreaktion erhaltenen erfindungsgemäßen Copolymerisats III wurden wie vorstehend beschrieben ermittelt. Die hierbei erhaltenen Werte finden sich ebenfalls in der Tabelle.

Wie aus der Tabelle hervorgeht, waren die erfindungsgemäßen Copolymerisate III der Beispiele 7 bis 19 ausgezeichnete VI-Verbesserer in Mineral- und Schmierölen, insbesondere Motor- und Getriebeölen. Hierbei wiesen sie eine hervorragende dispergierende Wirkung auf.

Tabelle

Die anwendungstechnischen Eigenschaften der erfindungsgemäßen Copolymerisate III der Beispiele 7 bis 19

| Bei-spiel Nr. | Molekular-gewicht[1] ($10^5$ g/mol) | Viskosität bei 40°C ($mm^2/s$) | Viskosität bei 100°C ($mm^2/s$) | SSI nach DIN 51382 | Scherver-lust (%) | Viskositäts-Index VI | Dispergierende Wirkung Verhältnis der Laufradien von Rup zu Öl in % a) | b) | c) | d) |
|---|---|---|---|---|---|---|---|---|---|---|
| 7 | 1,51 | 162 | 20,5 | 36 | 25,2 | 148 | 76,4 | 73,1 | 79,4 | 78,4 |
| 8 | 1,46 | 183 | 24,4 | 60 | 42,5 | 165 | 73,4 | 75 | 78,6 | 64,8 |
| 9 | 1,58 | 126 | 18,1 | 55 | 37,3 | 161 | 70,5 | 71 | 72,5 | 67,5 |
| 10 | 1,48 | 166 | 21 | 27 | 20,5 | 150 | 75,2 | 72,5 | 80 | 77,5 |
| 11 | 1,43 | 172 | 23,1 | 52 | 35,8 | 163 | 70,6 | 68,6 | 69,4 | 73,6 |
| 12 | 1,53 | 115 | 16,6 | 55 | 34 | 158 | 72,6 | 74 | 76,4 | 75 |
| 13 | 1,51 | 160 | 20,2 | 38 | 25,2 | 146 | 71,2 | 72,2 | 82,9 | 82,8 |
| 14 | 1,46 | 170 | 22,7 | 54 | 35,7 | 161 | 76,1 | 75,4 | 82 | 76,6 |
| 15 | 1,58 | 121 | 16,2 | 50 | 30,5 | 144 | 71 | 73,2 | 75 | 74 |
| 16 | 1,60 | 182 | 21,4 | 27 | 20 | 140 | 71 | 70,2 | 68,5 | 69 |
| 17 | 1,63 | 148 | 18,6 | 30 | 19,1 | 142 | 67,6 | 69 | 73,2 | 76,9 |
| 18 | 1,70 | 127 | 17,4 | 48 | 33,7 | 151 | 65,5 | 67 | 70,5 | 71 |
| 19 | 1.35 | 169 | 23,9 | 27 | 20 | 172 | 77,5 | 78 | 80,5 | 80 |

a) Öldispersion ohne Wasser

b) Öldispersion mit 1 Gew.-% Wasser

c) Öldispersion ohne Wasser nach Erhitzen auf 250°C

d) Öldispersion mit 1 % Wasser nach Erhitzen auf 250°C

1) ermittelt durch die Gelpermeationschromatographie

**Patentansprüche**

1. Alkadien-Vinylaromat-Copolymerisate mit statistischem, blockartigem oder sternförmigem Aufbau, deren einpolymerisierte Alkadiencomonomereinheiten selektiv partiell oder vollständig hydriert sind, dadurch gekennzeichnet, daß sie mindestens eine Seitengruppe mit mindestens einem Rest enthalten, welcher zur (4+2)-Cycloaddition (Diels-Alder-Reaktion) mit Dienophilen befähigt oder welcher durch (4+2)-Cycloaddition nach Diels-Alder eines Dienrestes mit einem Dienophil hergestellt worden ist.

2. Alkadien-Vinylaromat-Copolymerisate nach Anspruch 1, dadurch gekennzeichnet, daß sie mindestens eine Seitengruppe mit mindestens einem Rest enthalten, der

   (a) durch (4+2)-Cycloaddition nach Diels-Alder eines Dienrestes mit einem Dienophil, welches polare funktionelle Gruppen enthält, und

   (b) Umsetzen des resultierenden (4+2)-Cycloadditionsproduktes oder Diels-Alder-Addukts mit Ammoniak, organischen Aminen, Alkylenoxiden, Polyalkylenoxiden und/oder Kondensationsprodukten von Ammoniak und/oder organischen Aminen mit Alkylenoxiden

   hergestellt worden ist.

3. Alkadien-Vinylaromat-Copolymerisate nach Anpruch 1 oder 2, dadurch gekennzeichnet, daß die Seitengruppe mindestens einen Cyclopentadienylrest enthält.

4. Alkadien-Vinylaromat-Copolymerisate nach Anspruch 3, dadurch gekennzeichnet, daß die Seitengruppe mindestens einen entweder direkt oder über einen aromatischen Rest der Seitengruppe an die Polymerhauptkette(n) gebundenen Cyclopentadienylrest der allgemeinen Formeln Ia, Ib oder Ic enthält,

   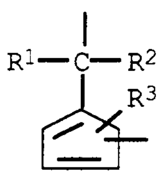
   (Ia)

   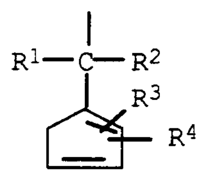
   (Ib)

   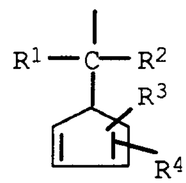
   (Ic)

   worin die Reste $R^1$ bis $R^4$ gleich oder verschieden voneinander sein können und Wasserstoffatome, lineare oder verzweigte, substituierte oder unsubstituierte $C_1$- bis $C_{22}$-Alkyl- oder -Alkenylreste, lineare oder verzweigte, substituierte oder unsubstituierte $C_1$- bis $C_{22}$-Alkyl- oder -Alkenylreste, deren Kohlenstoffkette(n) mit Sauerstoff, N-($C_1$- bis $C_4$-Alkyl) und/oder Schwefel unterbrochen ist oder sind, substituierte oder unsubstituierte $C_3$- bis $C_{20}$-Cycloalkylreste, substituierte oder unsubstituierte $C_6$- bis $C_{20}$-Arylreste, substituierte oder unsubstituierte $C_6$- bis $C_{20}$-Aryl- oder $C_3$- bis $C_{20}$-Cycloalkylreste, welche noch mindestens einen der vorstehend genannten $C_1$- bis $C_{22}$-Alkyl- und/oder -Alkenylreste, $C_{13}$- bis $c_{20}$-Cycloalkylreste und/oder $C_6$- bis $C_{20}$-Arylreste enthalten, oder die vorstehend genannten $C_1$- bis $C_{22}$-Alkyl- oder -Alkenylreste, welche noch mindestens einen der vorstehend genannten $C_6$- bis $C_{20}$-Aryl- und/oder $C_3$- bis $C_{20}$-Cycloalkylreste enthalten, bezeichnen, wobei die Reste $R^1$ und $R^2$ als Bestandteile eines gemeinsamen Rings cyclisch miteinander verknüpft sein können und wobei die Substituenten der vorstehend genannten substituierten Alkyl-, Alkenyl-, Cycloalkyl-, Aryl- und Arylalkylreste keine CH-aciden funktionellen Gruppen enthalten dürfen.

5. Alkadien-Vinylaromat-Copolymerisate nach Anspruch 4, dadurch gekennzeichnet, daß die Reste $R^1$ und $R^2$ Methyl oder Ethyl bezeichnen.

6. Alkadien-Vinylaromat-Copolymerisate nach einem der Ansprüche 1 bis 4, dadurch gekennzeichnet, daß die Dienophile stark polare funktionelle Gruppen enthalten.

7. Alkadien-Vinylaromat-Copolymerisate nach Anspruch 6, dadurch gekennzeichnet, daß es sich bei den stark polaren funktionellen Gruppen um Säuregruppen, Säuregruppen liefernde funktionelle Gruppen, Ketogruppen oder Aldehydgruppen handelt.

**8.** Alkadien-Vinylaromat-Copolymerisate nach Anspruch 7, dadurch gekennzeichnet, daß es sich bei den Säuregruppen um Carboxylgruppen und bei den Säuregruppen liefernden funktionellen Gruppen um Carbonsäureanhydrid-, Carbonsäurehalogenid- oder Estergruppen handelt.

**9.** Seitengruppen enthaltende Alkadien-Vinylaromat-Copolymerisate mit statistischem, blockartigem oder sternförmigem Aufbau, deren einpolymerisierte Alkadiencomonmereinheiten selektiv partiell oder vollständig hydriert sind, herstellbar durch

(1) Metallieren eines AlkadienXVinylaromat-Copolymerisats mit statistischem, blockartigem oder sternförmigem Aufbau, dessen einpolymerisierte Alkadiencomonomereinheiten selektiv partiell oder vollständig hydriert sind, unter Bildung der betreffenden metallierten, carbanionischen Zentren enthaltenden Copolymerisate,

(2) Umsetzen dieser Copolymerisate mit Fulvenen der allgemeinen Formel II,

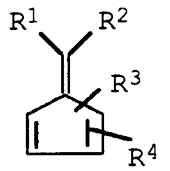

(II)

worin die Reste $R^1$ bis $R^4$ die in Anspruch 4 oder 5 angegebene Bedeutung haben, unter Bildung des betreffenden Copolymerisats mit Cyclopentadienylanionen in den Seitengruppen,

(3) Protolyse diese Copolymerisats,

(4) gegebenenfalls Umsetzen dieses protolysierten Copolymerisats mit einem Dienophil unter Bildung des betreffenden (4+2)-Cycloadditionsproduktes oder Diels-Alder-Addukts und

(5) gegebenenfalls Umsetzen dieses Umsetzungsproduktes mit einem Dienophil mit Ammoniak, organischen Aminen, Alkylenoxiden, Polyalkylenoxiden und/oder Kondensationsprodukten von Ammoniak und/oder organischen Aminen mit Alkylenoxiden.

**10.** Verfahren zur Herstellung von Seitengruppen enthaltenden Alkadien-Vinylaromat-Copolymerisaten mit statistischem, blockartigem oder sternförmigem Aufbau, deren einpolymerisierte Alkadiencomonomereinheiten selektiv partiell oder vollständig hydriert sind, mit mindestens einer Seitengruppe mit mindestens einem Rest, welcher durch (4+2)-Cycloaddition nach Diels-Alder eines Dienrestes mit einem Dienophil hergestellt worden ist, gekennzeichnet durch

(1) Metallieren eines Alkadien-Vinylaromat-Copolymerisats mit statistischem, blockartigem oder sternförmigem Aufbau, dessen einpolymerisierte Alkadiencomonomereinheiten selektiv partiell oder vollständig hydriert sind, unter Bildung der betreffenden metallierten, carbanionischen Zentren enthaltenden Copolymerisate,

(2) Umsetzen dieser Copolymerisate mit Fulvenen der allgemeinen Formel II,

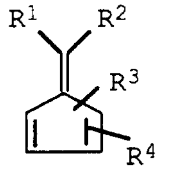

(II)

worin die Reste $R^1$ bis $R^4$ die in Anspruch 4 oder 5 angegebene Bedeutung haben, unter Bildung des betreffenden Copolymerisats mit Cyclopentadienylanionen in den Seitengruppen,

(3) Protolyse diese Copolymerisats,

(4) Umsetzen dieses protolysierten Copolymerisats mit einem Dienophil unter Bildung des betreffenden (4+2)-Cycloadditionsproduktes oder Diels-Alder-Addukts und

(5) gegebenenfalls Umsetzen dieses Umsetzungsproduktes mit einem Dienophil mit Ammoniak, organischen Aminen, Alkylenoxiden, Polyalkylenoxiden und/oder Kondensationsprodukten von Ammoniak und/oder organischen Aminen mit Alkylenoxiden.

**11.** Verfahren zur Herstellung von Seitengruppen enthaltenden Alkadien-Vinylaromat-Copolymerisaten mit blockartigem oder sternförmigem Aufbau, deren einpolymerisierte Alkadiencomonomereinheiten selektiv partiell oder vollständig hydriert sind, nach Anspruch 10 durch anionische Blockmischpolymerisation von Vinylaromaten und Alkadienen, selektive Hydrierung der erhaltenen Alkadien-Vinylaromat-Copolymerisate, Metallierung der selektiv hydrierten Alkadien-Vinylaromat-Copolymerisate und Umsetzen der hierbei resultierenden, carbanionische Zentren enthaltenden selektiv hydrierten Alkadien-Vinylaromat-Copolymerisate mit Fulvenen II, gefolgt von der Protolyse der hierbei erhaltenen Produkte, dadurch gekennzeichnet, daß man

($\alpha$) unmittelbar nach der Herstellung des selektiv hydrierten Alkadien-Vinylaromat-Copolymerisats mit blockartigem oder sternförmigem Aufbau in ein und demselben Reaktionsgefäß die bei der Hydrierung verwendete Wasserstoffatmosphäre durch Stickstoff verdrängt, das betreffende Copolymerisat metalliert und das resultierende, carbanionische Zentren enthaltende Produkt mit einem Fulven II umsetzt und

($\beta$) das durch den Verfahrensschritt ($\alpha$) erhaltene Produkt in ein und demselben Reaktionsgefäß protolysiert und gegebenenfalls mit Dienophilen weiter umsetzt.

**12.** Verwendung der Alkadien-Vinylaromat-Copolymerisate gemäß einem der Ansprüche 1 bis 9 in der Motortechnik und als Viskositäts-Index(VI)-Verbesserer in Mineral- und Schmierölen.

**13.** Verwendung der Alkadien-Vinylaromat-Copolymerisate mit mindestens einer Seitengruppe mit mindestens einem Rest, welcher durch (4+2)-Cycloaddition nach Diels-Alder eines Dienrestes mit einem Dienophil hergestellt worden ist, gemäß einem der Ansprüche 1 bis 9 als dispergierende Viskositäts-Index-(VI)-Verbesserer in Mineral- und Schmierölen.

**14.** Verwendung nach Anspruch 12 oder 13 in Motor- und Getriebeölen.

**15.** Mineral- und Schmieröle, dadurch gekennzeichnet, daß sie wirksame Mengen mindestens eines Alkadien-Vinylaromat-Copolymerisats gemäß einem der Ansprüche 1 bis 9 enthalten.

## Claims

**1.** An alkadiene/vinylaromatic copolymer which has a random, block-like or star-like structure and whose polymerized alkadiene comonomer units are partially or completely selectively hydrogenated, wherein said copolymer contains one or more side groups having one or more radicals which are capable of (4+2) cycloaddition (Diels-Alder reaction) with dienophiles or which have been prepared by a Diels-Alder (4+2) cycloaddition reaction of a diene radical with a dienophile.

**2.** An alkadiene/vinylaromatic copolymer as claimed in claim 1, wherein said copolymer contains one or more side groups having one or more radicals which have been prepared by

(a) a Diels-Alder (4+2) cycloaddition reaction of a diene radical with a dienophile which contains polar functional groups and
(b) reaction of the resulting (4+2) cycloadduct or Diels-Alder adduct with ammonia, an organic amine, an alkylene oxide, a polyalkylene oxide or a condensate of ammonia or an organic amine with an alkylene oxide.

**3.** An alkadiene/vinylaromatic copolymer as claimed in claim 1 or 2, wherein the side group contains one or more cyclopentadienyl radicals.

**4.** An alkadiene/vinylaromatic copolymer as claimed in claim 3, wherein the side group contains one or more cyclopentadienyl radicals which are bonded either directly or via an aromatic radical of the side group to the polymer main chain(s) and are of the formula Ia, Ib or Ic

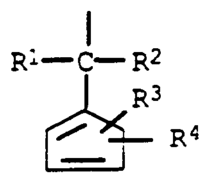 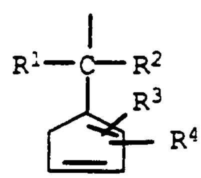 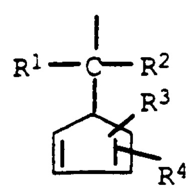

(Ia) (Ib) (Ic)

where $R^1$ to $R^4$ may be identical or different and are each hydrogen, a straight-chain or branched, substituted or unsubstituted $C_1$-$C_{22}$-alkyl or alkenyl radical, a straight-chain or branched, substituted or unsubstituted $C_1$-$C_{22}$-alkyl or alkenyl radical whose carbon chain(s) is or are interrupted by oxygen, N-($C_1$-$C_4$-alkyl) or sulfur, substituted or unsubstituted $C_3$-$C_{20}$-cycloalkyl, substituted or unsubstituted $C_6$-$C_{20}$-aryl, a substituted or unsubstituted $C_6$-$C_{20}$-aryl or $C_3$-$C_{20}$-cycloalkyl radical which furthermore contains one or more of the abovementioned $C_1$-$C_{22}$-alkyl or alkenyl radicals, $C_{13}$-$C_{20}$-cycloalkyl or $C_6$-$C_{20}$-aryl, or the abovementioned $C_1$-$C_{22}$-alkyl or alkenyl radicals which furthermore contain one or more of the abovementioned $C_6$-$C_{20}$-aryl or $C_3$-$C_{20}$-cycloalkyl radicals, and $R^1$ and $R^2$ may be cyclically bonded to one another as parts of a common ring and the substituents of the abovementioned substituted alkyl, alkenyl, cycloalkyl, aryl and arylalkyl radicals must not contain any CH-acidic functional groups.

**5.** An alkadiene/vinylaromatic copolymer as claimed in claim 4, wherein $R^1$ and $R^2$ are each methyl or ethyl.

**6.** An alkadiene/vinylaromatic copolymer as claimed in claim 1 or 2 or 3 or 4, wherein the dienophiles contain strongly polar functional groups.

**7.** An alkadiene/vinylaromatic copolymer as claimed in claim 6, wherein the strongly polar functional groups are acid groups, functional groups donating acid groups, or keto or aldehyde groups.

**8.** An alkadiene/vinylaromatic copolymer as claimed in claim 7, wherein the acid groups are carboxyl groups and the functional groups donating acid groups are carboxylic anhydride, carbonyl halide or ester groups.

**9.** An alkadiene/vinylaromatic copolymer which contains side groups and has a random, block-like or star-like structure, whose polymerized alkadiene comonomer units are partially or completely selectively hydrogenated and which can be prepared by

(1) metallizing an alkadiene/vinylaromatic copolymer which has a random, block-like or star-like structure and whose polymerized alkadiene comonomer units are partially or completely selectively hydrogenated, with formation of the relevant metallized copolymer containing carbanion centers,
(2) reacting this copolymer with a fulvene of the formula II

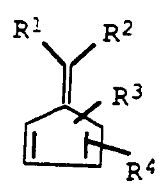 (II)

where $R^1$ to $R^4$ have the meanings stated in claim 4 or 5, with formation of the relevant copolymer having cyclopentadienyl anions in the side groups,
(3) subjecting this copolymer to protolysis,
(4) if required, reacting this copolymer, which has been subjected to protolysis, with a dienophile, with formation of the relevant (4+2) cycloadduct or Diels-Alder adduct, and
(5) if required, reacting this product of the reaction with a dienophile with ammonia, an organic amine, an alkylene oxide, a polyalkylene oxide or a condensate of ammonia or an organic amine with an alkylene oxide.

**10.** A process for the preparation of an alkadiene/vinylaromatic copolymer which contains side groups and has a random, block-like or star-like structure and whose polymerized alkadiene comonomer units are partially or completely

selectively hydrogenated, and which contains one or more side groups having one or more radicals, which have been prepared by a Diels-Alder (4+2) cycloaddition reaction of a diene radical with a dienophile, comprising the following steps:

(1) metallizing an alkadiene/vinylaromatic copolymer which has a random, block-like or star-like structure and whose polymerized alkadiene comonomer units are partially or completely selectively hydrogenated, with formation of the relevant metallized copolymer containing carbanion centers,
(2) reacting this copolymer with a fulvene of the formula II

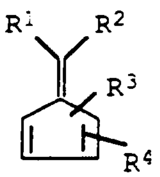

(II)

where $R^1$ to $R^4$ have the meanings stated in claim 4 or 5, with formation of the relevant copolymer having cyclopentadienyl anions in the side groups,
(3) subjecting this copolymer to protolysis,
(4) reacting this copolymer, which has been subjected to protolysis, with a dienophile, with formation of the relevant (4+2) cycloadduct or Diels-Alder adduct, and
(5) if required, reacting this product of the reaction with a dienophile with ammonia, an organic amine, an alkylene oxide, a polyalkylene oxide or a condensate of ammonia or an organic amine with an alkylene oxide.

**11.** A process for the preparation of an alkadiene/vinylaromatic copolymer which contains side groups and has a block-like or star-like structure and whose polymerized alkadiene comonomer units are partially or completely selectively hydrogenated, as claimed in claim 10, by anionic block copolymerization of a vinylaromatic and an alkadiene, selective hydrogenation of the resulting alkadiene/vinylaromatic copolymer, metallization of the selectively hydrogenated alkadiene/vinylaromatic copolymer and reaction of the resulting selectively hydrogenated alkadiene/vinylaromatic copolymer containing carbanion centers with a fulvene II, followed by the protolysis of the product obtained, wherein

($\alpha$) immediately after the preparation of the selectively hydrogenated alkadiene/vinylaromatic copolymer having a block-like or star-like structure, in one and the same reaction vessel, the hydrogen atmosphere used in the hydrogenation is displaced by nitrogen, the relevant copolymer is metallized and the resulting product containing carbanion centers is reacted with a fulvene II, and
($\beta$) in one and the same reaction vessel, the product obtained by process step ($\alpha$) is subjected to protolysis and, if required, further reacted with a dienophile.

**12.** Use of an alkadiene/vinylaromatic copolymer as claimed in claim 1 or 2 or 3 or 4 or 5 or 6 or 7 or 8 or 9 in engine technology and as a viscosity index (VI) improver in mineral oils and lubricating oils.

**13.** Use of an alkadiene/vinylaromatic copolymer which contains one or more side groups having one or more radicals, which have been prepared by a Diels-Alder (4+2) cycloaddition reaction of a diene radical with a dienophile, as claimed in claim 1 or 2 or 3 or 4 or 5 or 6 or 7 or 8 or 9, as a dispersant viscosity index (VI) improver in mineral oils and lubricating oils.

**14.** Use as claimed in claim 12 or 13 in engine oils and gear oils.

**15.** A mineral oil or lubricating oil, which contains effective amounts of one or more alkadiene/vinylaromatic copolymers as claimed in claim 1 or 2 or 3 or 4 or 5 or 6 or 7 or 8 or 9.

## Revendications

**1.** Copolymères alcadiène/vinylaromatique à structure statistique, en blocs ou en étoile, dont les motifs du comonomère alcadiène en liaison polymère sont hydrogénés sélectivement de façon partielle ou totale, caractérisés en ce qu'ils contiennent au moins un groupe latéral avec au moins un reste, qui peut participer à une cycloaddition (4+2) (réaction de Diels-Alder) avec des diénophiles ou bien qui est obtenu par cycloaddition (4+2) selon Diels-Alder d'un

reste diène avec un diénophile.

2. Copolymères alcadiène/vinylaromatique selon la revendication 1, caractérisés en ce qu'ils contiennent au moins un groupe latéral avec au moins un reste, qui est obtenu

a) par cycloaddition (4+2) selon Diels-Alder d'un reste diène avec un diénophile, qui contient des groupements fonctionnels polaires, et

b) réaction du produit résultant de la cycloaddition (4+2) ou adduit de Diels-Alder, avec de l'ammoniac, des amines organiques, des oxydes d'alkylène, des poly(oxyde d'alkylène) et/ou des produits de la condensation de l'ammoniac et/ou d'amines organiques avec des oxydes d'alkylène.

3. Copolymères alcadiène/vinylaromatique selon la revendication 1 ou 2, caractérisés en ce que le groupe latéral contient au moins un reste cyclopentadiényle.

4. Copolymères alcadiène/vinylaromatique selon la revendication 3, caractérisés en ce que le groupe latéral contient au moins un reste cyclopentadiényle de formules générales Ia, Ib ou Ic

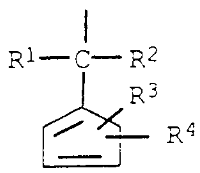

(Ia)

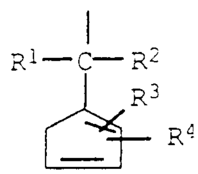

(Ib)

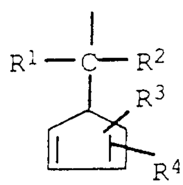

(Ic)

qui est relié à la (les) chaîne(s) principale(s) du polymère soit de façon directe soit par un reste aromatique du groupe latéral, où les restes $R^1$ à $R^4$ peuvent être identiques ou différents les uns des autres et sont mis pour des atomes d'hydrogène, des restes alcényle ou alkyle en $C_1$-$C_{22}$, linéaires ou ramifiés, substitués ou non substitués, des restes alcényle ou alkyle en $C_1$-$C_{22}$, linéaires ou ramifiés, substitués ou non substitués, dont la (les) chaîne(s) carbonée(s) est (sont) interrompue(s) par des atomes d'oxygène, des groupements N-(alkyle en $C_1$-$C_4$) et/ou des atomes de soufre, des restes cycloalkyle en $C_3$-$C_{20}$ substitués ou non substitués, des restes aryle en $C_6$-$C_{20}$ substitués ou non substitués, des restes cycloalkyle en $C_3$-$C_{20}$ ou aryle en $C_6$-$C_{20}$, substitués ou non substitués, qui contiennent en outre au moins un des restes alcényle et/ou alkyle en $C_1$-$C_{22}$, cycloalkyle en $C_3$-$C_{20}$ et/ou aryle en $C_6$-$C_{20}$ mentionnés ci-dessus, ou bien les restes alcényle ou alkyle en $C_1$-$C_{22}$ mentionnés ci-dessus, qui contiennent en outre au moins un des restes cycloalkyle en $C_3$-$C_{20}$ et/ou aryle en $C_6$-$C_{20}$ mentionnés ci-dessus, les restes $R^1$ et $R^2$ pouvant être reliés de manière à faire partie d'un cycle, et les substituants des restes substitués alkyle, acényle, cycloalkyle, aryle et arylalkyle mentionnés ci-dessus ne contenant aucun groupement fonctionne à CH acide.

5. Copolymères alcadiène/vinylaromatique selon la revendication 4, caractérisés en ce que les restes $R^1$ et $R^2$ sont mis pour des groupements méthyle ou éthyle.

6. Copolymères alcadiène/vinylaromatique selon l'une quelconque des revendications 1 à 4, caractérisés en ce que les diénophiles contiennent des groupements fonctionnels fortement polaires.

7. Copolymères alcadiène/vinylaromatique selon la revendication 6, caractérisés en ce que les groupements fonctionnels fortement polaires sont des groupements acide, des groupements fonctionnels donnant des groupements acide, des groupements cétone ou aldéhyde.

8. Copolymères alcadiène/vinylaromatique selon la revendication 7, caractérisés en ce que les groupements acide sont des groupements carboxylique et en ce que les groupements fonctionnels donnant des groupements acide sont des groupements anhydride d'acide carboxylique, des groupements halogénure d'acide carboxylique ou ester.

9. Copolymères alcadiène/vinylaromatique, contenant des groupes latéraux, à structure statistique, en blocs ou en étoile, dont les motifs du comonomère alcadiène en liaison polymère sont hydrogénés sélectivement de façon partielle ou totale, qu'on peut obtenir par

1) métallation d'un copolymère alcadiène/vinylaromatique à structure statistique, en blocs ou en étoile, dont les motifs du comonomère alcadiène en liaison polymère sont hydrogénés sélectivement de façon partielle ou totale, pour former le copolymère métallé correspondant contenant des centres carbanioniques,
2) réaction de ce copolymère avec des fulvènes de formule générale II,

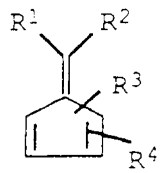

(II)

dans laquelle les restes $R^1$ à $R^4$ ont la signification donnée dans la revendication 4 ou 5, pour former le copolymère correspondant comportant des anions cyclopentadiényle dans les groupes latéraux,
3) protolyse de ce copolymère,
4) réaction éventuelle de ce copolymêre protolysé avec un diénophile pour former le produit de cycloaddition (4+2) correspondant ou adduit de Diels-Alder
5) réaction éventuelle de ce produit de la réaction avec un diénophile avec de l'ammoniac, des amines organiques, des oxydes d'alkylène, des poly(oxyde d'alkylène) et/ou des produits de la condensation d'ammoniac et/ou d'amines organiques avec des oxydes d'alkylène.

**10.** Procédé de préparation de copolymères alcadiène/vinylaromatique, contenant des groupes latéraux,à structure statistique, en blocs ou en étoile, dont les motifs du comonomère alcadiène en liaison polymère sont hydrogénés sélectivement de façon partielle ou totale, comportant au moins un groupe latéral avec au moins un reste, obtenu par cycloaddition (4+2), selon Diels-Alder, d'un reste diène avec un diénophile, caractérisé par

1) la métallation d'un copolymère alcadiène/vinylaromatique à structure statistique, en blocs ou en étoile, dont les motifs du comonomère alcadiène en liaison polymère sont hydrogénés sélectivement de façon partielle ou totale, pour former le copolymère métallé correspondant contenant des centres carbanioniques,
2) la réaction de ce copolymère avec des fulvènes de formule générale II,

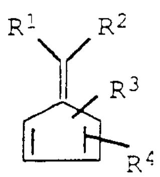

(II)

dans laquelle les restes $R^1$ à $R^4$ ont la signification donnée dans la revendication 4 ou 5, pour former le copolymère correspondant comportant des anions cyclopentadiényle dans les groupes latéraux,
3) la protolyse de ce copolymère,
4) la réaction éventuelle de ce copolymère protolysé avec un diénophile pour former le produit de cycloaddition (4+2) correspondant ou adduit de Diels-Alder
5) la réaction éventuelle de ce produit de la réaction avec un diénophile avec de l'ammoniac, des amines organiques, des oxydes d'alkylène, des poly(oxyde d'alkylène) et/ou des produits de la condensation d'ammoniac et/ou d'amines organiques avec des oxydes d'alkylène.

**11.** Procédé de préparation de copolymères alcadiène/vinylaromatique, contenant des groupes latéraux, à structure statistique, en blocs ou en étoile, dont les motifs du comonomère alcadiène en liaison polymère sont hydrogénés sélectivement de façon partielle ou totale, selon la revendication 10 par polymérisation anionique par greffage en blocs de vinylaromatiques et d'alcadiènes, par hydrogénation sélective du copolymère alcadiène/vinylaromatique obtenu, par métallation du copolymère alcadiène/vinylaromatique hydrogéné sélectivement et par réaction avec des fulvènes II du copolymère alcadiène/vinylaromatique hydrogéné sélectivement contenant des centres carbanioniques, suivie de la protolyse du produit ainsi obtenu, caractérisé en ce que

α) on chasse avec de l'azote l'atmosphère d'hydrogène utilisée pour l'hydrogénation, immédiatement après la préparation, du copolymère alcadiène/vinylaromatique, à structure en blocs ou en étoile, hydrogéné de façon sélective dans le même récipient réactionnel, on métalle le copolymère correspondant et l'on fait réagir avec un fulvène II le produit contenant des centres carbanioniques et copolymère correspondant et l'on fait réagir avec un fulvène II le produit contenant des centres carbanioniques et

β) on protolyse le produit obtenu dans l'étape α) dans le même récipient réactionnel et on le fait éventuellement réagir avec des diénophiles.

**12.** Utilisation de copolymères alcadiène/vinylaromatique selon l'une quelconque des revendications 1 à 9 dans le domaine des moteurs et en tant qu'agent améliorant l'indice de viscosité (VI) pour des huiles minérales et des huiles lubrifiantes.

**13.** Utilisation de copolymères alcadiène/vinylaromatique comportant au moins un groupe latéral avec au moins un reste obtenu par cycloaddition (4+2) selon Diels-Alder d'un reste diène avec un diénophile, selon l'une quelconque des revendications 1 à 9, en tant qu'agent dispersant améliorant l'indice de viscosité (VI) pour des huiles minérales et des huiles lubrifiantes.

**14.** Utilisation selon la revendication 12 ou 13 dans des huiles pour moteurs et pour transmissions.

**15.** Huiles minérales et huiles lubrifiantes, caractérisées en ce qu'elles contiennent des quantités efficaces d'au moins un copolymère alcadiène/vinylaromatique selon l'une quelconque des revendications 1 à 9.